# EUROPEAN PATENT APPLICATION

(11) **EP 4 124 889 A1**
(43) Date of publication of application: **01.02.2023**
(21) Application number: 22187357.3
(22) Date of filing: 28.07.2022
(51) Int. Cl.: G01S 17/89, G06V 10/00, G06V 10/70, G06V 20/56

(54) **A METHOD AND A SYSTEM TO DETECT A JUNCTION AHEAD OF A VEHICLE**

(30) Priority: 30.07.2021 GB 202110993
(71) Applicant: Continental Autonomous Mobility Germany GmbH, 85057 Ingolstadt (DE)
(72) Inventor: Onkarappa, Naveen, 339780 Singapore (SG); Chavali, Pothuraju, 339780 Singapore (SG)
(74) Representative: Continental Corporation

(57) **Abstract**

The present disclosure relates to a method to detect junction (101) ahead of vehicles (102). The method is performed by a detection system (107). The method comprises determining a first road boundary (103) to a left side of a vehicle (102) and a second road boundary (104) to a right side of the vehicle (102). Further, the method comprises determining a first direction (105) associated with the first road boundary (103) and a second direction (106) associated with the second road boundary (104) in a direction (113) of movement of the vehicle (102). Furthermore, the method comprises identifying presence of a junction (101) ahead of the vehicle (102) based on the determined first and second directions (105, 106). Thereafter, the method comprises determining a pattern associated with the junction (101), to detect the junction (101) as one of, a roundabout (404) or an angular intersection (504) ahead of the vehicle (102).

## Description

### TECHNICAL FIELD

The present disclosure generally relates to the field of autonomous vehicles. More particularly, the present disclosure relates to a method and a system to detect a junction ahead of a vehicle.

### BACKGROUND

Autonomous vehicle technology is progressing from needing driver assistance to having full autonomy. The autonomous vehicle technology is enabling the real-time decision-making of humans in autonomous vehicles. Navigation of the autonomous vehicles is performed by receiving road information. The road information supports the autonomous vehicles when performing driving manoeuvres. The capability of recognizing road junctions and handling subsequent decisions is essential for autonomous vehicles.

Conventional techniques use Global Positioning System (GPS) to handle road junctions and its subsequent decisions. However, it is difficult to get GPS signals in some places in the urban environment which render the junction decision handling erroneous. Further, the conventional techniques depend on information such as lane marks, road marks, traffic sign information, and the like. However, such techniques may fail in absence of the information. Hence, there is need for an improved system to detect the road junctions in absence of such information.

The information disclosed in this background of the disclosure section is only for enhancement of understanding of the general background of the invention and should not be taken as an acknowledgement or any form of suggestion that this information forms the prior art already known to a person skilled in the art.

### SUMMARY

In an embodiment, the present disclosure discloses a method to detect a junction ahead of a vehicle. The method comprises determining a first road boundary to a left side of a vehicle and a second road boundary to a right side of the vehicle. Further, the method comprises determining a first direction associated with the first road boundary and a second direction associated with the second road boundary in a direction of movement of the vehicle. Furthermore, the method comprises identifying presence of a junction ahead of the vehicle based on the determined first and second directions. Thereafter, the method comprises determining a pattern associated with the junction. The pattern is determined to detect the junction as one of, a roundabout or an angular intersection ahead of the vehicle.

In an embodiment, the present disclosure discloses a detection system to detect a junction ahead of a vehicle. The detection system comprises one or more processors and a memory. The one or more processors are configured to determine a first road boundary to a left side of a vehicle and a second road boundary to a right side of the vehicle. Further, the one or more processors are configured to determine a first direction associated with the first road boundary and a second direction associated with the second road boundary in a direction of movement of the vehicle. Furthermore, the one or more processors are configured to identify presence of a junction ahead of the vehicle based on the determined first and second directions. Thereafter, the one or more processors are configured to determine a pattern associated with the junction. The pattern is determined to detect the junction as one of, a roundabout or an angular intersection ahead of the vehicle.

As used in this summary, in the description below, in the claims below, and in the accompanying drawings, the term "road boundary" means a boundary between a road and a site or a surface not configured or designed for motor vehicles to travel on.

As used in this summary, in the description below, in the claims below, and in the accompanying drawings, the term "junction" is where more than two roads meet. The junction may be the roundabout, the angular intersection, and the like.

As used in this summary, in the description below, in the claims below, and in the accompanying drawings, the term "angular intersection" is a junction where at least two roads meet and movement of vehicles in multiple directions is controlled using a traffic signal. For example, the angular intersection is a T-junction, a Y-junction, and the like. An angular intersection does not comprise a central island or a surface not configured or designed for motor vehicles to travel on around which a continuous movement of vehicles is permitted.

As used in this summary, in the description below, in the claims below, and in the accompanying drawings, the term "roundabout" is a junction where at least two roads meet, and continuous movement of vehicles is permitted in one direction around a central island or a surface not configured or designed for motor vehicles to travel on.

As used in this summary, in the description below, in the claims below, and in the accompanying drawings, the term "vehicle" means a transportation device suitable for transporting humans or goods from a first location to a second location.

As used in this summary, in the description below, in the claims below, and in the accompanying drawings, the term "first road boundary" means a boundary to a left side of the vehicle.

As used in this summary, in the description below, in the claims below, and in the accompanying drawings, the term "second road boundary" means a boundary to a right side of the vehicle.

As used in this summary, in the description below, in the claims below, and in the accompanying drawings, the term "pattern" means a shape, size and the like of the junction.

As used in this summary, in the description below, in the claims below, and in the accompanying drawings, the term "at least" followed by a number is used in to denote the start of a range beginning with that number (which may be a range having an upper limit or no upper limit, depending on the variable being defined). For example, "at least one" means one or more than one.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The novel features and characteristics of the disclosure are set forth in the appended claims. The disclosure itself, however, as well as a preferred mode of use, further objectives, and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:
Figure 1A illustrates exemplary environment to detect a junction ahead of a vehicle, in accordance with some embodiments of the present disclosure;
Figure 1B illustrates exemplary environment for determination of a first road boundary and a second road boundary based on a grid map, in accordance with some embodiments of the present disclosure;
Figure 2 illustrates an internal architecture of a detection system to detect a junction ahead of a vehicle, in accordance with some embodiments of the present disclosure;
Figure 3 shows an exemplary flow chart illustrating method steps to detect a junction ahead of a vehicle, in accordance with some embodiments of the present disclosure;
Figures 4A, 4B, and 5 show exemplary illustrations to detect a junction ahead of a vehicle, in accordance with some embodiments of the present disclosure; and
Figure 6 shows a block diagram of a general-purpose computing system to detect a junction ahead of a vehicle, in accordance with embodiments of the present disclosure.

It should be appreciated by those skilled in the art that any block diagram herein represents conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternatives falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or apparatus.

Embodiments of the present disclosure relate to a method to detect junction ahead of vehicles. Firstly, road boundaries to a left side of a vehicle and a right side of the vehicle are determined. Next, first and second directions associated with the first road boundary and the second road boundary,, respectively in a direction of movement of the vehicle is determined. The presence of the junction ahead of the vehicle is identified based on the first and second directions associated with the road boundaries. Upon determining the presence of the junction, a pattern associated with the junction is determined. The junction is detected to be either a roundabout or an angular intersection based on the determined pattern.

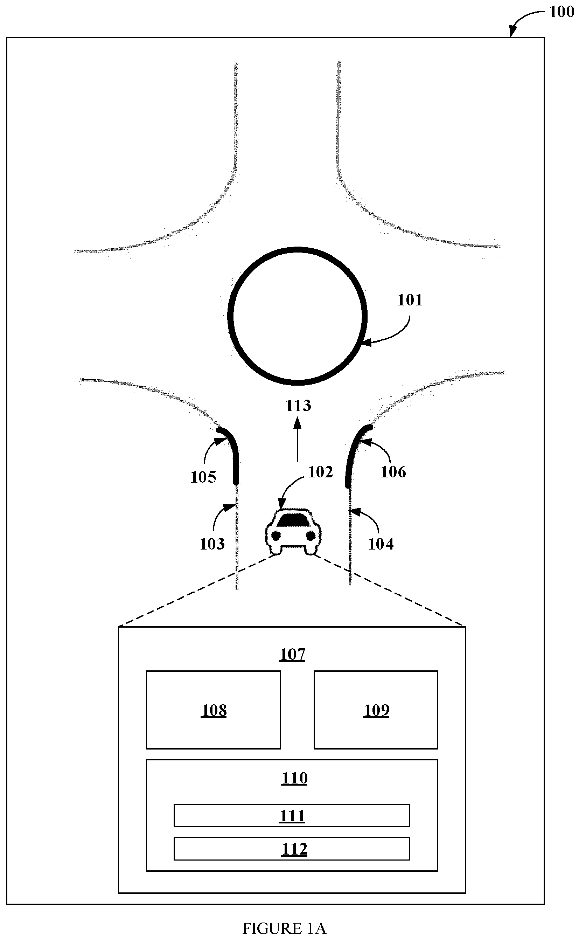

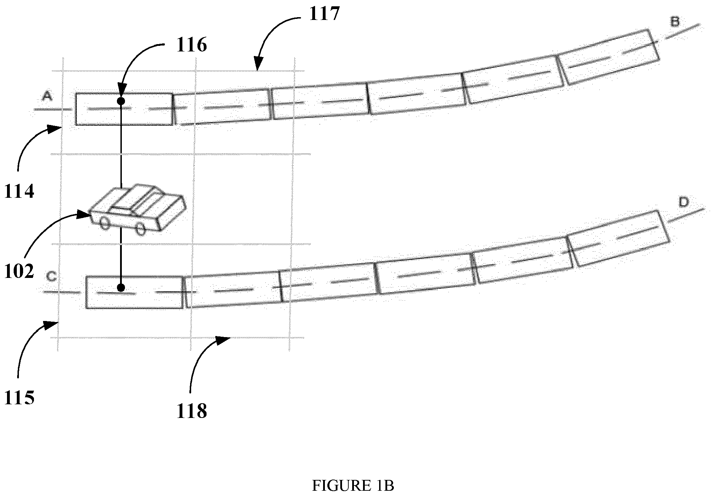

Figure 1A illustrates exemplary environment 100 to detect a junction ahead of a vehicle, in accordance with some embodiments of the present disclosure. The exemplary environment 100 comprises a vehicle 102, a first road boundary 103 to a left side of the vehicle 102 and a second road boundary 104 to a right side of the vehicle 102, and a junction 101 ahead of the vehicle 102. The vehicle 102 may be a car, a truck, a bus, and the like. In an embodiment of the present disclosure, the vehicle 102 may be an autonomous vehicle or a self-driving vehicle. The vehicle 102 may be embedded with Advanced Driver Assistance Systems (ADAS). The vehicle 102 may comprise a detection system 107. A person skilled in the art will appreciate that the vehicle 102 comprises several other components. However, the other components are not named as they do not fall under the scope of the present disclosure. The detection system 107 may be configured in an electronic control unit of the vehicle 102. The detection system 107 is configured to detect the junction 101 ahead of the vehicle 102. The junction 101 may be a roundabout, an angular intersection, and the like. The angular intersection may be a T-intersection. A person skilled in the art will appreciate the junctions are not limited to aforementioned junctions. The detection system 107 may determine the first road boundary 103 and the second road boundary 104. Further, the detection system 107 may determine a first direction 105 associated with the first road boundary 103 and a second direction 106 associated with the second road boundary 104 in a direction of movement of the vehicle 102. The direction of movement of the vehicle is represented as 113. The first direction 105 associated with the first road boundary 103 may be away from the second direction 106 associated with the second road boundary 104 as shown in Figure 1. The first and second directions 105, 106 may be bending away from each other, due to presence of the junction 101 ahead of the vehicle 102. Hence, the detection system 107 may determine the first and second directions 105, 106 associated with the first road boundary 103 and the second road boundary 104, respectively, in the direction 113 of movement of the vehicle 102, to identify the presence of the junction 101. Further, the detection system 107 may determine a pattern associated with the junction 101. The pattern may be determined to detect the junction 101 as one of, the roundabout or the angular intersection ahead of the vehicle 102.

The detection system 107 may include Central Processing Units 108 (also referred as "CPUs" or "one or more processors 108"), Input/ Output (I/O) interface 109, and a memory 110. In some embodiments, the memory 110 may be communicatively coupled to the processor 108. The memory 110 stores instructions executable by the one or more processors 108. The one or more processors 108 may comprise at least one data processor for executing program components for executing user or system-generated requests. The memory 110 may be communicatively coupled to the one or more processors 108. The memory 110 stores instructions, executable by the one or more processors 108, which, on execution, may cause the one or more processors 108 to detect the junction 101 ahead of the vehicle 102. In an embodiment, the memory 110 may include one or more modules 112 and data 111. The one or more modules 112 may be configured to perform the steps of the present disclosure using the data 111, to detect junction 101 ahead of the vehicle 102. In an embodiment, each of the one or more modules 112 may be implemented as a hardware unit which may be outside the memory 110 and coupled with the detection system 107. As used herein, the term modules 112 refers to an Application Specific Integrated Circuit (ASIC), an electronic circuit, a Field-Programmable Gate Arrays (FPGA), Programmable System-on-Chip (PSoC), a combinational logic circuit, and/or other suitable components that provide described functionality. The one or more modules 112 when configured with the described functionality defined in the present disclosure will result in a novel hardware. Further, the I/O interface 109 is coupled with the one or more processors 108 through which an input signal or/and an output signal is communicated. For example, the detection system 107 may receive a grid map (grid map is explained in detail, later in the present description) to determine the first road boundary 103 and the second road boundary 104, via the I/O interface 109. In an embodiment, the detection system 107, to detect the junction 101 ahead of the vehicle 102, may be implemented in a variety of computing systems, such as a laptop computer, a desktop computer, a Personal Computer (PC), a notebook, a smartphone, a tablet, e-book readers, a server, a network server, a cloud-based server and the like.

Figure 1B illustrates exemplary environment for determination of the first road boundary 103 and the second road boundary 104 based on the grid map. The grid map represents a map of an environment as an evenly spaced field of binary values, each representing the presence of an obstacle at a location in the environment. The grid map comprises a plurality of cells, with each cell comprising a value of occupancy in an environment surrounding the vehicle 102. The value of occupancy may be a probability for degree of occupancy on a location in the environment. For example, a high probability may indicate presence of an object or the obstacle at the location. The grid map may be generated from any suitable sensor, for example, a Radio Detection and Ranging (RADAR) sensor may be used. A person skilled in the art will appreciate any known methods to generate the grid map may be used. The grid map may be used to determine the locations of the static obstacle. The value of occupancy may be a non-zero value for presence of the static obstacles. The value of occupancy may be 0 for free space. The first road boundary 103 and the second road boundary 104 may be static obstacles. Hence, a determination of the value of occupancy to be a non-zero value may help in determining the first road boundary 103 and the second road boundary 104. Initially, the value of occupancy of a first right cell 115 at a right side of the vehicle 102 may be determined to be a non-zero value. Similarly, the value of occupancy of a first left cell 114 at a left side of the vehicle 102 may be determined to be a non-zero value. The value may be non-zero at a location 116 in the environment. Further, the value of occupancy of one or more right cells 118 in a region ahead of the first right cell 115 is determined. Similarly, the value of occupancy of one or more left cells 117 in a region ahead of the first left cell 114 is determined. In the present description, the term one or more right cells 118 and one or more left cells 117 refer to successive cells ahead of the first right cell 115 and the first left cell 114, respectively. Further, the orientation of the one or more right cells 118 with respect to the first right cell 115 may be determined. Similarly, the orientation of the one or more left cells 117 with respect to the first left cell 114 may be determined. The first road boundary 103 and the second road boundary 104 are determined based on the determined value of occupancy and the orientation, of the one or more right cells 118 and the one or more left cells 117. The non-zero value of occupancy may be used to determine the presence of the first road boundary 103 and the second road boundary 104. The orientation may be used to determine only the presence of the first road boundary 103 and the second road boundary 104 and ignore other static obstacles such as poles.

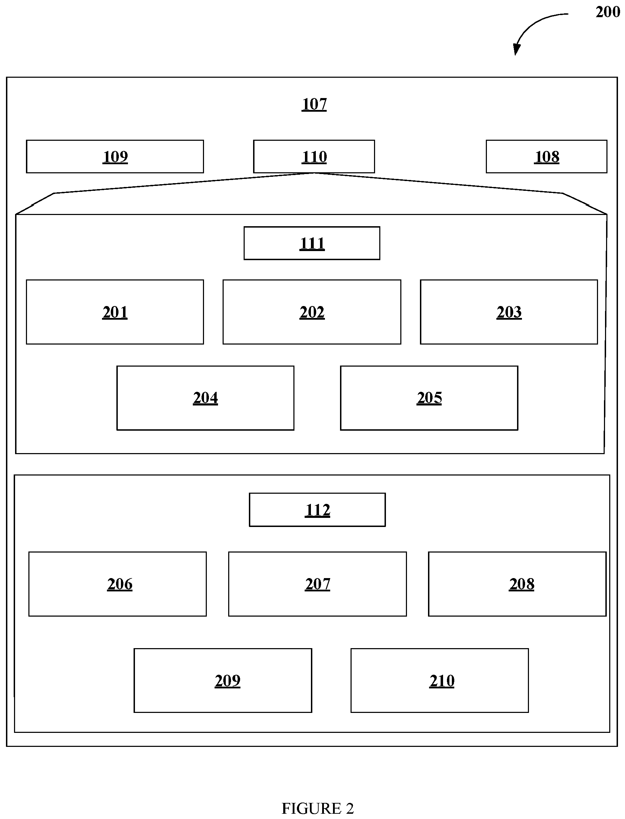

Figure 2 illustrates an internal architecture 200 of the detection system 107 to detect the junction 101 ahead of the vehicle 102, in accordance with some embodiments of the present disclosure. The detection system 107 may include the one or more processors 108, the memory 110 and the I/O interface 109.

In one implementation, the modules 112 may include, for example, a boundary determination module 206, a direction determination module 207, a junction identification module 208, a pattern determination module 209, and other modules 210. It will be appreciated that such aforementioned modules 112 may be represented as a single module or a combination of different modules. In one implementation, the data 111 may include, for example, boundary data 201, direction data 202, junction identification data 203, pattern data 204, and other data 205.

In an embodiment, the boundary determination module 206 may be configured to receive the grid map. In an embodiment, the boundary determination module 206 may receive the grid map from a sensor. In another embodiment, the grid map may be stored in the memory 110. The boundary determination module 206 may be configured to determine the value of occupancy of the first right cell 115 at the right side of the vehicle 102. Further, the boundary determination module 206 may be configured to determine the value of occupancy of the first left cell 114 at the left side of the vehicle 102. The boundary determination module 206 may determine the value of occupancy of each cell of the grid map, to the right side and the left cell of the vehicle 102. The boundary determination module 206 may ignore cells of the grid map with value of occupancy as zero. The boundary determination module 206 may consider a cell with the non-zero value, each at the right side and the left side of the vehicle 102, as the first right cell 115 and the first left cell 114, respectively. Further, the boundary determination module 206 may determine the value of occupancy of the one or more right cells 118 in a region ahead of the first right cell 115. Similarly, the boundary determination module 206 may determine the value of occupancy of the one or more left cells 117 in a region ahead of the first left cell 114. The boundary determination module 206 may determine the value of occupancy of the one or more right cells 118 and the one or more left cells 117 to determine a continuous boundary. The boundary determination module 206 may determine the value of occupancy for the static obstacles only. Further, the boundary determination module 206 may determine an orientation of the one or more right cells 118 with respect to the first right cell 115. Similarly, the boundary determination module 206 may determine an orientation of the one or more left cells 117 with respect to the first left cell 114. The boundary determination module 206 may determine the orientation to determine a continuous boundary and ignore other static obstacles such as beacons. The boundary determination module 206 may determine the first road boundary 103 and the second road boundary 104 based on the determined value of occupancy and the orientation, of the one or more right cells 118 and the one or more left cells 117. The grid map, the value of occupancy of the first right cell 115, the first left cell 114, the one or more right cells 118, the one or more left cells 117 and corresponding orientations may be stored as the boundary data 201 in the memory 110.

In an embodiment, the direction determination module 207 may be configured to receive data related to the first road boundary 103 and the second road boundary 104 from the boundary determination module 206. The direction determination module 207 may determine the first direction 105 associated with the first road boundary 103 based on the orientation of the one or more right cells 118. Further, the direction determination module 207 may be configured to determine the second direction 106 associated with the second road boundary 104 based on the orientation of the one or more left cells 117. The first direction 105 associated with the first road boundary 103 and the second direction 106 associated with the second road boundary 104 may be determined in the direction 113 of movement of the vehicle 102. The determined first and second directions 105, 106 associated with the first road boundary 103 and the second road boundary 104, respectively, may be stored as the direction data 202 in the memory 110.

In an embodiment, the junction identification module 208 may be configured to receive the determined first and second directions 105, 106 associated with the first road boundary 103 and the second road boundary 104, respectively, from the direction determination module 207. The junction identification module 208 may determine the presence of the junction 101 ahead of the vehicle 102. The junction identification module 208 may determine an orientation of the first direction 105 associated with the first road boundary 103 with respect to an orientation of the second direction 106 associated with the second road boundary 104. When the first direction 105 associated with the first road boundary 103 is away from the second direction 106 associated with the second road boundary 104, there may the junction 101 ahead of the vehicle 102. Hence, the junction identification module 208 may determine the presence of the junction 101 when the first direction 105 associated with the first road boundary 103 is away from the second direction 106 associated with the second road boundary 104. Data related to the presence of the junction 101 may be stored as the junction identification data 203 in the memory 110, for further processing. For example, the presence of the junction 101 may be stored as a value 1 along with a location of the junction 101. The locations of the junction 101 may be used for analysis.

In an embodiment, the pattern determination module 209 may be configured to receive the junction identification data 203. For example, the pattern determination module 209 may receive a control signal from the junction identification module 208. The control signal may be having a value 1, indicating the presence of the junction 101 ahead of the vehicle 102. The pattern determination module 209 may determine a pattern associated with the junction 101. The pattern determination may comprise at least one of, detecting a shape of the junction 101 or an area occupied by the junction 101. The pattern determination module 209 may detect the shape of the junction 101 and the area occupied by the junction 101 based on the value of occupancy in the grid map. A person skilled in the art may appreciate the detection of the shape and the area of the junction 101 using edge detection, segmentation algorithms, and the like. The pattern determination module 209 may determine the junction 101 to be a roundabout when the shape of the junction 101 is a circular-like shape and the area occupied by the junction 101 is lesser than a first pre-determined threshold value. The circular-like shape may be a circle, an ellipse, or any circular like shape. The first pre-determined threshold value may be a minimum value to detect the junction 101 to be the roundabout. Further, the pattern determination module 209 may determine the junction 101 to be an angular intersection when the junction 101 is formed by at least two roads, the shape of the junction 101 is such that each road of the at least two roads joining the junction 101 forms a pre-defined angle with each of other roads from the at least two roads, and the area occupied by the junction 101 is lesser than a second pre-determined threshold value. For example, the angular junction may be a T-junction. The pre-defined angle between each road and other roads may be 90°. In another example, the angular junction may be a Y-junction. The pre-defined angle between a first road and each of a second road and a third road may be 135°. Further, the pre-defined angle between the second road and the third road may be 90°. The second pre-determined threshold value may be a minimum value to detect the junction 101 to be the angular intersection. A plurality of pre-determined shapes associated with various junction types may be stored in the memory 110. The shape of the junction 101, the area occupied by the junction 101, the first pre-determined threshold value, and the second pre-determined threshold value may be stored as the pattern data 204 in the memory 110.

The other data 205 may store data, including temporary data and temporary files, generated by the one or more modules 112 for performing the various functions of the detection system 107. The one or more modules 112 may also include the other modules 210 to perform various miscellaneous functionalities of the detection system 107. For example, the other modules 210 may comprise a user interface to display a presence of the junction 101. The presence of the junction 101 may be provided as an alert. A person skilled in the art will appreciate that the presence of the junction 101 may be provided in any known forms. For example, the presence of the junction 101 may be provided as text, voice, and the like. The alert may be stored as the other data 205 in the memory 110. It will be appreciated that the one or more modules 112 may be represented as a single module or a combination of different modules.

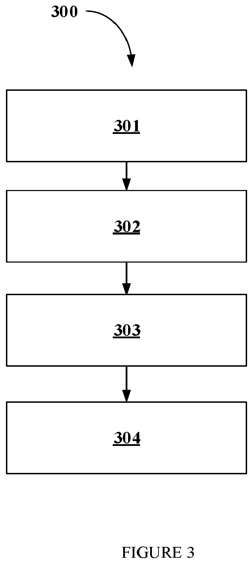

Figure 3 shows an exemplary flow chart illustrating method steps to detect the junction 101 ahead of the vehicle 102, in accordance with some embodiments of the present disclosure. As illustrated in Figure 3, the method 300 may comprise one or more steps. The method 300 may be described in the general context of computer executable instructions. Generally, computer executable instructions can include routines, programs, objects, components, data structures, procedures, modules, and functions, which perform particular functions or implement particular abstract data types.

The order in which the method 300 is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

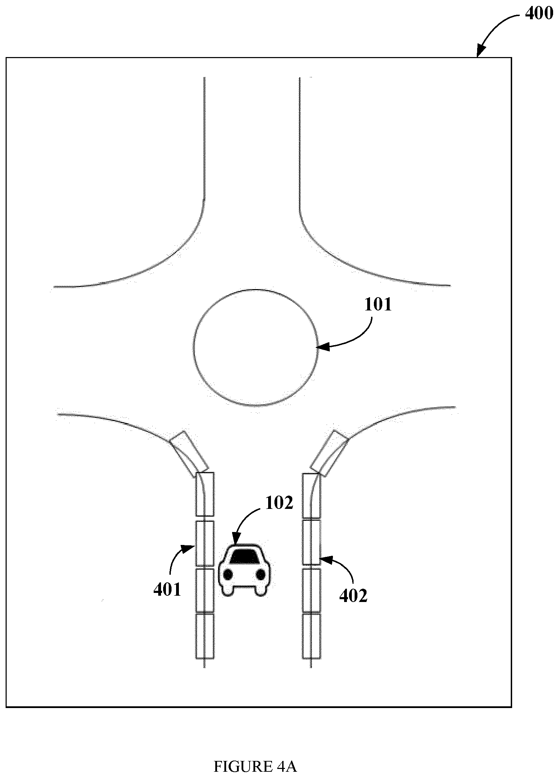

At step 301, the first road boundary 103 to the left side of a vehicle 102 and the second road boundary 104 to the right side of the vehicle 102 may be determined by the detection system 107. The detection system 107 may receive the grid map. Further, the detection system 107 may determine the value of occupancy of the first right cell 115 at the right side of the vehicle 102 and the first left cell 114 at the left side of the vehicle 102, to be the non-zero value. Further, the detection system 107 may determine the value of occupancy of the one or more right cells 118 in a region ahead of the first right cell 115 and the one or more left cells 117 in a region ahead of the first left cell 114. Further, the detection system 107 may determine an orientation of the one or more right cells 118 with respect to the first right cell 115. Similarly, the detection system 107 may determine an orientation of the one or more left cells 117 with respect to the first left cell 114. The detection system 107 may determine the first road boundary 103 and the second road boundary 104 based on the determined value of occupancy and the orientation, of the one or more right cells 118 and the one or more left cells 117. Referring to example 400 of Figure 4A, 401 shows the determination of the first road boundary 103 to the left side of the vehicle 102 based on the value of occupancy and the orientation of the one or more left cells 117. Similarly, 402 shows the determination of the second road boundary 104 to the right side of the vehicle 102 based on the value of occupancy and the orientation of the one or more right cells 118.

Referring again to Figure 3, at step 302, the first direction 105 associated with the first road boundary 103 and the second direction 106 associated with the second road boundary 104 in the direction 113 of movement of the vehicle 102 is determined by the detection system 107. The detection system 107 may determine the first direction 105 associated with the first road boundary 103. Further, the detection system 107 may determine the second direction 106 associated with the second road boundary 104. The first direction 105 associated with the first road boundary 103 and the second direction 106 associated with the second road boundary 104 may be determined in the direction 113 of movement of the vehicle 102. For example, the directions 105, 106 may be straight with respect to the direction 113 of movement of the vehicle 102. The directions 105, 106 may be at an angle with respect to the direction 113 of movement of the vehicle 102.

At step 303, identifying presence of the junction 101 ahead of the vehicle 102 based on the determined first and second directions 105, 106, by the detection system 107. The detection system 107 may determine an orientation of the first direction 105 associated with the first road boundary 103 with respect to the second direction 106 associated with the second road boundary 104. When the direction 105 associated with the first road boundary 103 is away from the direction 106 associated with the second road boundary 104, there may the junction 101 ahead of the vehicle 102. The detection system 107 may determine the presence of the junction 101 when the first direction 105 associated with the first road boundary 103 is away from the second direction 106 associated with the second road boundary 104. Referring back to the example 400 of Figure 4A, the first direction 105 associated with the first road boundary 103 is away from the second direction 106 associated with the second road boundary 104. The presence of the junction 101 ahead of the vehicle 102 may be determined.

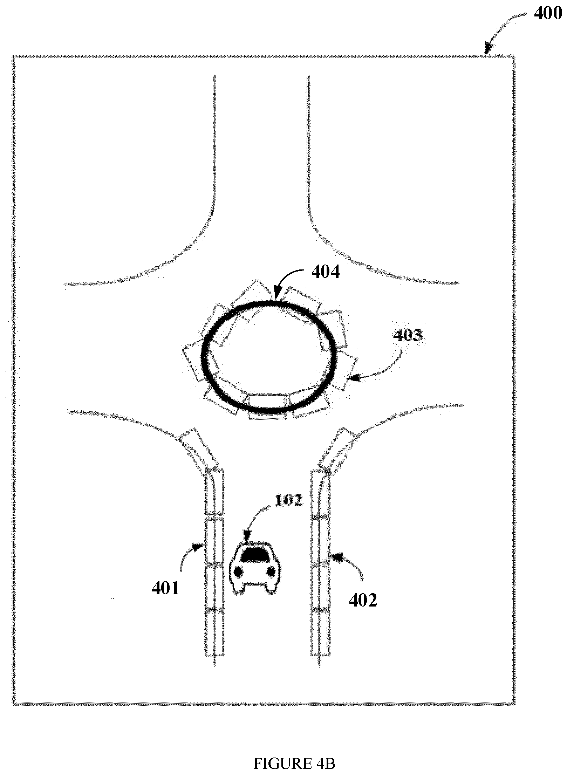

At step 304, determining the pattern associated with the junction 101, by the detection system 107. The pattern determination may comprise at least one of, detecting the shape of the junction 101 or the area occupied by the junction 101. The detection system 107 may detect the shape of the junction 101 and the area occupied by the junction 101 based on the value of occupancy in the grid map. The detection system 107 may determine the junction 101 to be the roundabout when the shape of the junction 101 is a circular-like shape and the area occupied by the junction 101 is lesser than the first pre-determined threshold value. The first pre-determined threshold value may be a minimum value to detect the junction 101 to be the roundabout. Further, the detection system 107 may determine the junction 101 to be the angular intersection when the junction 101 is formed by at least two roads, the shape of the junction 101 is such that each road of the at least two roads joining the junction 101 forms a pre-defined angle with each of other roads from the at least two roads, and the area occupied by the junction 101 is lesser than a second pre-determined threshold value. The second pre-determined threshold value may be a minimum value to detect the junction 101 to be the angular intersection. Referring to Figure 4B, the junction 101 may be a roundabout 404. The detection system 107 may determine the junction 101 to be the roundabout 404 based on the circular-like shape of the roundabout 404 and the area occupied by the roundabout 404. The detection system 107 may detect the shape of the roundabout 404 based on the value of occupancy of a plurality of cells 403 of the grid map.

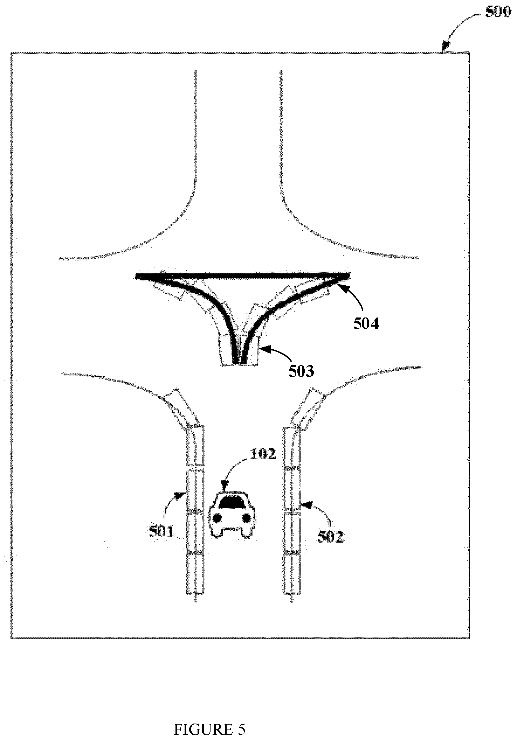

Reference is now made to Figure 5. The detection system 107 may determine the first road boundary 103 and the second road boundary 104 based on the value of occupancy and the orientation of one or more left cells 501 and one or more right cells 502. There may be an angular intersection 504 ahead of the vehicle 102. The detection system 107 may determine the shape and the area occupied by the angular intersection 504. The detection system 107 may detect the shape of the angular intersection 504 based on the value of occupancy of a plurality of cells 503 of the grid map.

### COMPUTER SYSTEM

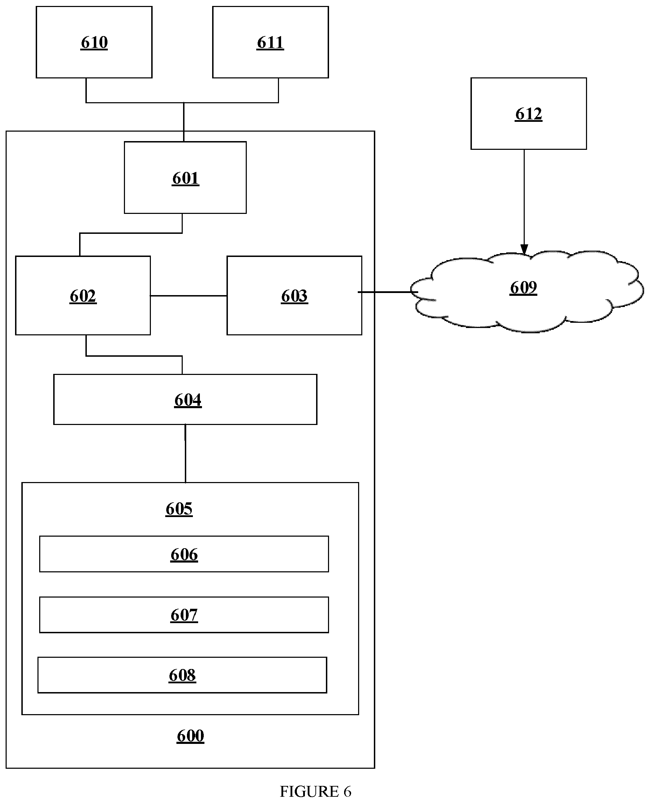

Figure 6 illustrates a block diagram of an exemplary computer system 600 for implementing embodiments consistent with the present disclosure. In an embodiment, the computer system 600 may be used to implement the detection system 107. Thus, the computer system 600 may be used to detect the junction 101 ahead of the vehicle 612. The computer system 600 may comprise a Central Processing Unit 602 (also referred as "CPU" or "processor"). The processor 602 may comprise at least one data processor. The processor 602 may include specialized processing units such as integrated system (bus) controllers, memory management control units, floating point units, graphics processing units, digital signal processing units, etc.

The processor 602 may be disposed in communication with one or more input/output (I/O) devices (not shown) via I/O interface 601. The I/O interface 601 may employ communication protocols/methods such as, without limitation, audio, analog, digital, monoaural, RCA, stereo, IEEE (Institute of Electrical and Electronics Engineers) -1394, serial bus, universal serial bus (USB), infrared, PS/2, BNC, coaxial, component, composite, digital visual interface (DVI), high-definition multimedia interface (HDMI), Radio Frequency (RF) antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 601, the computer system 600 may communicate with one or more I/O devices. For example, the input device 610 may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device 611 may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

The computer system 600 may be connected to the vehicle 612 through a communication network 609. The processor 602 may be disposed in communication with the communication network 609 via a network interface 603. The network interface 603 may communicate with the communication network 609. The network interface 603 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 609 may include, without limitation, a direct interconnection, local area network (LAN), wide area network (WAN), wireless network (e.g., using Wireless Application Protocol), the Internet, etc. The network interface 603 may employ connection protocols include, but not limited to, direct connect, Ethernet (e.g., twisted pair 10/100/1000 Base T), transmission control protocol/internet protocol (TCP/IP), token ring, IEEE 802.11a/b/g/n/x, etc.

The communication network 609 includes, but is not limited to, a direct interconnection, an e-commerce network, a peer to peer (P2P) network, local area network (LAN), wide area network (WAN), wireless network (e.g., using Wireless Application Protocol), the Internet, Wi-Fi, and such. The first network and the second network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the first network and the second network may include a variety of network devices, including routers, bridges, servers, computing devices, storage devices, etc.

In some embodiments, the processor 602 may be disposed in communication with a memory 605 (e.g., RAM, ROM, etc. not shown in Figure 6) via a storage interface 604. The storage interface 604 may connect to memory 605 including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 605 may store a collection of program or database components, including, without limitation, user interface 606, an operating system 607, web browser 608 etc. In some embodiments, computer system 600 may store user/application data, such as, the data, variables, records, etc., as described in this disclosure. Such databases may be implemented as fault-tolerant, relational, scalable, secure databases such as Oracle ^{®} or Sybase^{®}.

The operating system 607 may facilitate resource management and operation of the computer system 600. Examples of operating systems include, without limitation, APPLE MACINTOSH^{R} OS X, UNIX^{R}, UNIX-like system distributions (E.G., BERKELEY SOFTWARE DISTRIBUTION^{™} (BSD), FREEBSD^{™}, NETBSD^{™}, OPENBSD^{™}, etc.), LINUX DISTRIBUTIONS^{™} (E.G., RED HAT^{™}, UBUNTU^{™}, KUBUNTU^{™}, etc.), IBM^{™} OS/2, MICROSOFT^{™} WINDOWS^{™} (XP^{™}, VISTA^{™}/7/8, 10 etc.), APPLE^{R} IOS^{™}, GOOGLE^{R} ANDROID^{™}, BLACKBERRY^{R} OS, or the like.

In some embodiments, the computer system 600 may implement the web browser 608 stored program component. The web browser 608 may be a hypertext viewing application, for example MICROSOFT^{R} INTERNET EXPLORER^{™}, GOOGLE^{R} CHROME^{™0}, MOZILLA^{R} FIREFOX^{™}, APPLE^{R} SAFARI^{™}, etc. Secure web browsing may be provided using Secure Hypertext Transport Protocol (HTTPS), Secure Sockets Layer (SSL), Transport Layer Security (TLS), etc. Web browsers 608 may utilize facilities such as AJAX^{™}, DHTML^{™}, ADOBE^{R} FLASH^{™}, JAVASCRIPT^{™}, JAVA^{™}, Application Programming Interfaces (APIs), etc. In some embodiments, the computer system 600 may implement a mail server (not shown in Figure) stored program component. The mail server may be an Internet mail server such as Microsoft Exchange, or the like. The mail server may utilize facilities such as ASP^{™}, ACTIVEX^{™}, ANSI^{™} C++/C#, MICROSOFT^{R}, NET^{™}, CGI SCRIPTS^{™}, JAVA^{™}, JAVASCRIPT^{™}, PERL^{™}, PHP^{™}, PYTHON^{™}, WEBOBJECTS^{™}, etc. The mail server may utilize communication protocols such as Internet Message Access Protocol (IMAP), Messaging Application Programming Interface (MAPI), MICROSOFT^{R} exchange, Post Office Protocol (POP), Simple Mail Transfer Protocol (SMTP), or the like. In some embodiments, the computer system 600 may implement a mail client stored program component. The mail client (not shown in Figure) may be a mail viewing application, such as APPLE^{R} MAIL^{™}, MICROSOFT^{R} ENTOURAGE^{™}, MICROSOFT^{R} OUTLOOK^{™}, MOZILLA^{R} THUNDERBIRD^{™}, etc.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, non-volatile memory, hard drives, Compact Disc Read-Only Memory (CD ROMs), Digital Video Disc (DVDs), flash drives, disks, and any other known physical storage media.

Embodiments of the present disclosure provides methods to detect junction ahead of vehicles in the absence of lane marks, road marks, traffic sign information and the like. Roundabout and angular intersection detection helps in smooth and safe manoeuvring of assisted/ automated vehicles in such traffic situations. Embodiments of the present disclosure can be used to detect diversion of roads.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise. The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of Figure 3 show certain events occurring in a certain order. In alternative embodiments, certain operations may be performed in a different order, modified, or removed. Moreover, steps may be added to the above described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

**Referral Numerals:**

| **Referral Number** | **Description** |
|---|---|
| 100 | Exemplary environment |
| 101 | Junction |
| 102 | Vehicle |
| 103 | First road boundary |
| 104 | Second road boundary |
| 105 | First direction |
| 106 | Second direction |
| 107 | Detection system |
| 108 | Processor |
| 109 | I/O interface |
| 110 | Memory |
| 111 | Data |
| 112 | Modules |
| 113 | Direction of movement of vehicle |
| 114 | First left cell |
| 115 | First right cell |
| 116 | Location |
| 117 | One or more left cells |
| 118 | One or more right cells |
| 200 | Internal architecture |
| 201 | Boundary data |
| 202 | Direction data |
| 203 | Junction identification data |
| 204 | Pattern data |
| 205 | Other data |
| 206 | Boundary determination module |
| 207 | Direction determination module |
| 208 | Junction identification module |
| 209 | Pattern determination module |
| 210 | Other modules |
| 400 | Example |
| 401 | Determination of first road boundary |
| 402 | Determination of second road boundary |
| 403 | Plurality of cells |
| 404 | Roundabout |
| 500 | Example |
| 501 | Determination of first road boundary |
| 502 | Determination of second road boundary |
| 503 | Plurality of cells |
| 504 | Angular intersection |
| 600 | Computer system |
| 601 | I/O interface |
| 602 | Processor |
| 603 | Network interface |
| 604 | Storage interface |
| 605 | Memory |
| 606 | User interface |
| 607 | Operating system |
| 608 | Web browser |
| 609 | Communication network |
| 610 | Input device |
| 611 | Output device |
| 612 | Vehicle |

## Claims

1. A method to detect a junction (101) ahead of a vehicle (102), the method comprising:
determining, by one or more processors (108), a first road boundary (103) to a left side of a vehicle (102) and a second road boundary (104) to a right side of the vehicle (102);
determining, by the one or more processors (108), a first direction (105) associated with the first road boundary (103) and a second direction (106) associated with the second road boundary (104) in a direction (113) of movement of the vehicle (102);
identifying, by the one or more processors (108), presence of a junction (101) ahead of the vehicle (102) based on the determined first and second directions (105, 106);
determining, by the one or more processors (108), a pattern associated with the junction (101), to detect the junction (101) as one of, a roundabout (404) or an angular junction (504) ahead of the vehicle (102).

2. The method of claim 1, wherein the first road boundary (103) and the second road boundary (104) are determined, by the one or more processors (108), based on a grid map, wherein the grid map comprises a plurality of cells, with each cell comprising a value of occupancy in an environment surrounding the vehicle (102).

3. The method of claim 2, wherein determining the first road boundary (103) and the second road boundary (104) comprises:
determining, by the one or more processors (108), a value of occupancy of a first right cell (115) at a right side of the vehicle (102) and a first left cell (114) at a left side of the vehicle (102), to be a non-zero value;
determining, by the one or more processors (108), a value of occupancy of one or more right cells (118) in a region ahead of the first right cell (115) and one or more left cells (117) in a region ahead of the first left cell (114);
determining, by the one or more processors (108), an orientation of the one or more right cells (118) and the one or more left cells (117) with respect to the first right cell (115) and the first left cell (114), respectively; and
determining, by the one or more processors (108), the first road boundary (103) and the second road boundary (104) based on the determined value of occupancy and the orientation, of the one or more right cells (118) and the one or more left cells (117).

4. The method of claim 1, wherein the presence of the junction (101) is identified, by the one or more processors (108), when the direction (105) associated with the first road boundary (103) is away from the direction (106) associated with the second road boundary (104).

5. The method of claim 1, wherein determining the pattern associated with the junction (101), by the one or more processors (108), comprises at least one of, detecting a shape of the junction (101) or an area occupied by the junction (101).

6. The method of claim 5, wherein the pattern is determined to be a roundabout (404), by the one or more processors (108), when the shape of the junction (101) is a circular-like shape and the area occupied by the junction (101) is lesser than a first pre-determined threshold value.

7. The method of claim 5, wherein the pattern is determined to be an angular intersection (504), by the one or more processors (108), when the junction (101) is formed by at least two roads, the shape of the junction (101) is such that each road of the at least two roads joining the junction (101) forms a pre-defined angle with each of other roads of the at least two roads, and the area occupied by the junction (101) is lesser than a second pre-determined threshold value.

8. A detection system (107) to detect a junction (101) ahead of a vehicle (102), the detection system (107) comprising:
one or more processors (108); and
a memory (110), wherein the memory (110) stores processor-executable instructions, which, on execution, cause the one or more processors (108) to:
determine a first road boundary (103) to a left side of a vehicle (102) and a second road boundary (104) to a right side of the vehicle (102);
determine a first direction (105) associated with the first road boundary (103) and a second direction (106) associated with the second road boundary (104) in a direction (113) of movement of the vehicle (102);
identify presence of a junction (101) ahead of the vehicle (102) based on the determined first and second directions (105, 106);
determine a pattern associated with the junction (101), to detect the junction (101) as one of, a roundabout (404) or an angular intersection (504) ahead of the vehicle (102).

9. The detection system (107) of claim 8, wherein the one or more processors (108) are configured to determine the first road boundary (103) and the second road boundary (104) based on a grid map, wherein the grid map comprises a plurality of cells, with each cell comprising a value of occupancy in an environment surrounding the vehicle (102).

10. The detection system (107) of claim 9, wherein the one or more processors (108) determines the first road boundary (103) and the second road boundary (104) by:
determining a value of occupancy of a first right cell (115) at a right side of the vehicle (102) and a first left cell (114) at a left side of the vehicle (102), to be a non-zero value;
determining a value of occupancy of one or more right cells (118) in a region ahead of the first right cell (115) and one or more left cells (117) in a region ahead of the first left cell (114);
determining an orientation of the one or more right cells (118) and the one or more left cells (117) with respect to the first right cell (115) and the first left cell (114), respectively; and
determining the first road boundary (103) and the second road boundary (104) based on the determined value of occupancy and the orientation, of the one or more right cells (118) and the one or more left cells (117).

11. The detection system (107) of claim 8, wherein the one or more processors (108) identifies the presence of the junction (101) when the first direction (105) associated with the first road boundary (103) is away from the second direction (106) associated with the second road boundary (104).

12. The detection system (107) of claim 8, wherein the one or more processors (108) determine the pattern associated with the junction (101), by at least one of, detecting a shape of the junction (101) or an area occupied by the junction (101).

13. The detection system (107) of claim 12, wherein the one or more processors (108) determine the pattern to be a roundabout (404) when the shape of the junction (101) is a circular-like shape and the area occupied by the junction (101) is lesser than a first pre-determined threshold value.

14. The detection system (107) of claim 12, wherein the one or more processors (108) determine the pattern to be an angular intersection (504) when the junction (101) is formed by at least two roads, the shape of the junction (101) is such that each road of the at least two roads joining the junction (101) forms a pre-defined angle with each of other roads of the at least two roads, and the area occupied by the junction (101) is lesser than a second pre-determined threshold value.
